# EUROPEAN PATENT APPLICATION

(11) **EP 2 100 897 A1**
(43) Date of publication of application: **16.09.2009**
(21) Application number: 08101088.6
(22) Date of filing: 30.01.2008
(51) Int. Cl.: C07F 9/10, A23L 1/30, A23L 1/29, C12P 7/64

(54) **Lecithin based composition and its use in food**

(71) Applicant: BNLfood Investments SARL, 9559 Wiltz (LU)
(72) Inventor: Thiry, Jean-François, 6600 Bastogne (BE); Dejardin, Philippe, 4870 Trooz (BE); Schmitz, Christian, 6690 Vielsalm (BE); Lignian, Jacques, 6600 Bastogne (BE); Ramirez-Hernan, Philippe, 4432 Alleur (BE); De Meester, Fabien, 6900 Marche-en-Famenne (BE)
(74) Representative: Gevers, François

(57) **Abstract**

Isolated egg yolk lecithin product comprising a total fat content comprising an ω6 long chain polyunsaturated fatty acid (LCPUFA) portion having at least a phospholipidic fraction ranging from 30 mg/g to 100 mg/g total fat content, use of the product in a fat mixture of in an infant food formula.

## Description

The present invention relates to an isolated egg yolk lecithin product including a total fat content comprising an ω6 long chain polyunsaturated fatty acid (LCPUFA) portion having at least a phospholipidic fraction.

Egg lecithin is a mixing of cholesterol, triglycerides and phospholipids (comprising inter alia phosphatidylcholine, phosphatidylethanolamine and phosphatidylinositol).

A triglyceride is a fatty acid ester that is the main component of plant oil and animal fat. When a triglyceride is hydrolyzed (cleaved), fatty acids are released that provide energy for the human body.

A phospholipid is a lipid wherein a fatty acid has been replaced by a phosphate group. Under the enzymatic action of phospholipases, fatty acids contained in the phospholipid are released.

The arachidonic acid (ARA) and docosahexaenoic acid (DHA) are both long chain polyunsaturated fatty acids (LCPUFAs). They can therefore been incorporated or in other words, they can constitute a phospholipid or a triglyceride.

Typically, egg lecithin comprises arachidonic acid constituted by a phospholipidic fraction and by a triglyceridic fraction and docosahexaenoic acid constituted by a phospholipidic fraction and by a triglyceridic fraction.

A well known use of egg yolk lecithin product is in infant food, as mentioned in US 4.670.285. US 4.670.285 describes the use of ω6 LCPUFAs at from 5 to 100 mg/100 ml of the infant food formula and of ω3 LCPUFAs at from 0.5 to 60 mg per 100 ml of the formula.

The LCPUFAs are accumulated during pregnancy in the brain of the baby and after the birth, the baby normally receives the needed fatty acids via maternal milk which is rich in ω6 and ω3. in particular in arachidonic and docosahexaenoic acid.

An advantage to using egg yolk lipid as a source of fatty acids is that the C₂₀ and C_{22.} ω6 and ω3 fatty acids are then derived from a natural fat. Moreover, the edible fat product of this invention has beneficial effects on the synthesis of brain tissue, and on the absorption of calcium, and is absorbed in the gut at a high rate. Therefore the fat product is especially suited for incorporation into an infant formula particularly adapted for total nutritional support of the human infant.

Today, the FAO/WHO recommendations are to use arachidonic and docosahexaenoic acid as long chain polyunsaturated fatty acids in infant composition at a concentration of respectively 40 and 26.7 mg/100 ml for preterm infant food formula and of respectively 26.7 and 13.3 mg/100 ml for term infant food formula. Recommendation 1% EYPL.

The mother milk contains from 97 to 99 fatty acids in the triglyceride form and from 0.5 to 2 % fatty acids under the phospholipidic form of total lipids and the LCPUFAs are from 90 to 95 % under the triglyceride form and from 5 to 10 % under the phospholipidic form.

CA 2201931 discloses a fat mixture for being used in an infant food formula in which the arachidonic acid present in the fat mixture in the form of phospholipids makes up 0.2 to 3.0 mg/g total fat and the docosahexaenoic acid present in the form of phospholipids makes up 0.1 to 2.0 mg/g total fat, and in which the arachidonic acid and docosahexaenoic acid present in the fat mixture in the form of triglycerides each make up 0.5 to 15 wt% based on the sum of the fatty acids present in the form of triglycerides.

CA 2201931 describes the fact that the LCPUFAs in the form of a mixture of phospholipids and triglycerides can be reduced with respect to the observed values in triglycerides of mother milk, in order to decrease cost.

The plant oils and ruminant milk fats do not contain LCPUFAs under the phospholipidic form and for this reason, when the manufacturer of milk powder for infants intend to approach the natural value of mother milk, he has to use LCPUFAs from animal-derived phospholipids and/or single cell fermentation-derived triglycerides.

With the increasing security of the food chain, fats from animals tend to be safer and eggs gain in confidence to this end, but concentration of LCPUFAs in standard layer eggs is relatively low (±3%).

Nowadays, with the constant increase of the cost of poultry food, extraction of LCPUFAs from common poultry eggs will be shortly not viable from a pure economical point of view.

To solve this problem the invention provides an isolated egg yolk product that does not require to be used at high concentration for reaching the ω6 LCPUFA value recommended and specifically, the arachidonic acid (ARA) value of 2 mg/g total fat, being the standard in the infant food industry, whilst keeping cost low and providing a safe product with respect to quality standard in the food chain.

To this end, the invention provides an isolated egg yolk lecithin product having a phospholipidic fraction of said ω6 LCPUFA which ranges from 30 mg/g to 100 mg/g total fat content.

By the terms "phospholipidic fraction of said ω6 LCPUFA", it is meant ω6-LCPUFA from phospholipids. By the terms "phospholipidic fraction of said ω3 LCPUFA", it is meant ω3 LCPUFA from phospholipids.

Therefore, the isolated egg yolk lecithin product according to the invention presents a high content in phospholipids (from 30 to 100 mg/g total fat in ω6 LCPUFA thereby reducing the amount of isolated egg yolk lecithin product that is required for the use in an infant food formula and hence reducing the manufacturing costs.

Advantageously, the isolated egg yolk lecithin product according to the invention presents an ω6 LCPUFA portion that comprises a phospholipidic fraction ranging from 50 to 100 mg/g total fat content, and preferably from 65 to 100 mg/g total fat content.

In a preferred embodiment, the isolated egg yolk lecithin product according to the present invention comprises an ω6 LCPUFA portion which comprises an arachidonic acid portion comprised of a phospholipidic fraction ranging from 24 to 80 mg/g total fat content, and preferably ranging from 40 to 80 mg/g total fat content and preferably from 52 to 80 mg/g total fat content.

In the composition according to the invention, the arachidonic acid is the most important ω6 LCPUFA. Since the most important ω6 LCPUFA in mother milk is also arachidonic acid, the composition according to the invention is particularly useful to this end.

In the isolated egg yolk lecithin product according to the invention, the ω6 LCPUFA portion further presents an optional triglyceride fraction ranging from 0 to 2 mg/g total fat content.

By the terms "triglyceride fraction" of an ω6 or ω3 LCPUFA portion, it is respectively meant the ω6 or ω3 LCPUFA from triglycerids.

In a preferred embodiment according to the invention, the ω6 LCPUFA portion presents a triglyceride fraction ranging from 0.01 to 1.7 mg/g total fat content, preferably from 0.01 to 0.5 mg/g total fat content and more preferably from 0.01 to 0.025 mg/g total fat content.

As it can be seen, in the isolated egg yolk lecithin product according to the invention, the ratio of triglyceride fraction with respect to the phospholipidic fraction is very small.

In a variant, there is no triglyceride fraction in the isolated lecithin egg yolk product.

Advantageously, the total fat content of the isolated egg yolk lecithin product further comprises a ω3 LCPUFA portion having a phospholipidic fraction from 4.2 to 17 mg/g total fat, preferably from 7 to 17 mg/g total fat content and more preferably from 9.1 to 17 mg/g total fat.

Particularly, said ω3 LCPUFA portion comprises a docosahexaenoic acid portion having a phospholipidic fraction ranging from 3.4 mg/g to 13.6 mg/g total fat content.

The DHA are also very important LCPUFA that are found in maternal milk and it is very useful that this LCPUFA is present at this amount.

In a preferred embodiment according to the invention, said ω3 LCPUFA portion of the isolated lecithin egg yolk product further presents a triglyceride fraction ranging from 0 to 26 mg/l total fat content, aAnd preferably from 0 to 24.8 mg/g total fat.

In a more preferred embodiment, the triglyceride fraction of the ω3 LCPUFA portion of the isolated egg yolk lecithin product ranges from 0 to 0.04 mg/g total fat.

In a even more preferred embodiment, the isolated egg yolk lecithin product according to the invention does not contain any triglyceride fraction.

As it can be seen, this particular embodiment according to the invention comprises a very high concentration of LCPUFAs in phospholipids with respect to triglycerides, both in the ω6 LCPUFA portion and ω3 LCPUFA portion. Because phospholipids also provide choline to the human body and because they are key cell components for the development of the baby, it is clearly particularly useful to use the lecithin product according to the invention in food (either for babies, children, adults or for any animals or even plants requiring phospholipids).

Preferably, the egg yolk lecithin product is isolated from a poultry egg such as from a hen, a duck, a quail, an ostrich, a goose, a turkey and the like.

Other embodiments of the isolated egg yolk lecithin product according to the invention are mentioned in the annexed claims.

The invention relates also to a fat mixture comprising from 0.2 to 100 % of the isolated egg yolk lecithin product according to the present invention.

In a particular embodiment of the invention, the fat mixture comprises a total fat content comprising an ω6 long chain polyunsaturated fatty acid (LCPUFA) portion having at least a phospholipidic fraction and optionally a triglyceride fraction. The fat mixture according to the invention is further **characterized in that** the phospholipic fraction of the ω6 LCPUFA ranges from 1 mg/g to 100 mg/g total fat content and the triglyceride fraction of the ω6 LCPUFA portion ranges from 0 to 0.5 mg/g total fat.

As it can be seen, the fat mixture according to the invention does preferably not contain triglyceride or just traces, in the ω6 LCPUFA, i.e., does preferably not contain ω6 LCPUFA from triglyceride or just traces.

However, in some cases or applications, triglyceride is needed. In those cases, one or more fat component chosen in the group consisting of plant oil, fish oil, chemical oil and animal fat, single cell oil, aggregated cell oil, fat from animal products such as eggs, milk, flesh, meat, and the like are added in the isolated egg yolk lecithin product, to reach the standard of the manufacturer. Plant oil are rich in triglyceride and are very cheap with respect to animal-derived materials, thereby rendering the use appropriate in an economical process for manufacturing a food composition.

Other embodiments of the fat mixture according to the invention are mentioned in the annexed claims.

The invention relates also to an infant food formula comprising from 0.2 to 40 w% of the isolated egg yolk lecithin product according to the invention.

The total fat in infant food composition is around 3.8 g/100 ml. By using the lecithin based composition according to the invention being highly concentrated in ω6 LCPUFA, it is possible to manufacture an infant food formula as well as a preterm infant food formula, according to FAO/WHO standards. It has been shown that preterm babies require a higher content in LCPUFA to complete the development of the brain. The very high concentration of ω6 LCPUFAs in the composition according to the invention makes the composition particularly suitable to preterm babies also.

In a preferred embodiment, the infant food formula comprises from 2.3 to 33 w% of the isolated egg yolk lecithin product according to the invention.

As it can be seen, for example for term babies, the infant food composition comprising 2.3 % of the isolated egg yolk lecithin product according to the invention, for example comprising 88.6 mg phospholipid/g total fat content in the arachidonic acid portion, reaches 2.03 mg/g total fat content in arachidonic acid under the phospholipidic fraction being the standard generally used in infant food formula. Therefore the composition is very economically interesting because the amount to be used is very small.

In a preterm infant food composition, the amount of lecithin product according to the invention to be used is around 30 % of the total fat content (25%). Therefore, it is possible to have a very high content of LCPUFAs (FAO/WHO standards) while keeping a possibility for adding other nutriments in the food composition such as milk proteins.

In particular, the infant food formula comprises an ω6 long chain polyunsaturated fatty acid (LCPUFA) portion having at least a phospholipidic fraction and optionally a triglyceride fraction. The infant food formula is **characterized in that** the phospholipic fraction of the ω6 LCPUFA portion ranges from 1 mg/g to 12 mg/g total fat content and the triglyceride fraction of the ω6 LCPUFA portion ranges from 0 to 0.5 mg/g total fat.

More particularly, the ω6 LCPUFA portion of the infant food formula does not contain any triglyceride fraction or only traces of ω6 LCPUFA from triglyceride.

Advantageously, the ω3 LCPUFA portion of the infant food formula does not contain any triglyceride fraction or only traces of ω3 LCPUFA from triglyceride.

Other embodiments of the infant food composition are mentioned in the annexed claims.

The invention also relates to the use of a composition in the manufacture of an infant food composition. Preferably, from 2.3 to 33 w% of the composition is used.

Other embodiments of the use according to the invention are mentioned in the annexed claims.

Other characteristics and advantages of the invention will appear more clearly in the light of the following description of a particular non-limiting embodiment of the invention, while referring to the examples.

A detailed analysis of the fatty acid pattern has been done.

The results are illustrated in the following Table 1.

**Table 1**

| Fatty acids | g/kg Total fatty acids | g/kg triglycerides | g/kg phospholipids | g/kg free fatty acids |
|---|---|---|---|---|
| C14:0 | 2.18 | 0.13 | 1.86 | 0.18 |
| C16:0 | 203.25 | 4.22 | 180.23 | 18.80 |
| C18:0 | 65.35 | 0.61 | 59.73 | 5.01 |
| C20:0 | 0.20 | 0.00 | 0.00 | 0.20 |
| Σ**(SAFA)** | **270.98** | **4.96** | **241.82** | **24.19** |
| C16:1ω7/9 | 9.52 | 0.84 | 5.32 | 3.36 |
| C18:1ω7/9 | 195.36 | 11.02 | 139.45 | 44.90 |
| C20:1ω9 | 1.63 | 0.04 | 1.06 | 0.53 |
| Σ**(MUFA)** | **206.52** | **11.89** | **145.83** | **48.79** |
| C18:2ω6 | 54.20 | 1.81 | 41.39 | 10.99 |
| C18:3ω3 | 1.36 | 0.13 | 0.62 | 0.61 |
| Σ**(EFA)** | **55.56** | **1.95** | **42.01** | **11.60** |
| C20:4ω6 | 85.75 | 0.11 | 72.34 | 13.30 |
| C22:4ω6 | 3.81 | 0.02 | 3.26 | 0.53 |
| C22:5ω6 | 0.00 | 0.10 | 13.48 | -13.57 |
| Σ**(**ω**6LCP)** | **89.56** | **0.23** | **89.08** | **0.25** |
| C20:5ω3 | 0.88 | 0.00 | 0.70 | 0.18 |
| C22:5ω3 | 2.52 | 0.02 | 1.67 | 0.83 |
| C22:6ω3 | 13.80 | 0.02 | 9.76 | 4.02 |
| Σ**(**ω**3LCP)** | **17.20** | **0.04** | **12.13** | **5.03** |
| | **639.81** | **19.07** | **530.87** | **89.87** |

Total fatty acids were analyzed by standard GLC procedure of fatty acid methyl ester (FAME) derivatives, whereas triglyceride and phospholipidic fractions were separated by TLC procedure and submitted to high resolution gas chromatography (HRGC). The results in the table show that C20:4ω6 and C22:5 ω6 are not separated by standard GLC, but well so by HRGC, which explains the result of -13.57 g/kg for C22:5ω6 that is obtained by difference between total fatty acids and triglycerides + phospholipids.

### Example 1

The egg yolk lecithin has been extracted according to adaptation of previously described methodologies (WO 87/04711, WO 91/03946, WO 93/25644, WO 01/76715, WO 01/76385, DE 10018213) and the following composition has been obtained (see Table 2).

**Table 2**

| ω6 LCPUFA | | Docosahexaenoic acid | |
|---|---|---|---|
| Phospholipid | Triglyceride | Phospholipid | Triglyceride |
| mg/g total fat | mg/g total fat | mg/g total fat | mg/g total fat |
| 88.4 | 0 | 13.6 | 0 |

The ω6 LCPUFA is comprised of a fraction of arachidonic acid (about 80%) and a fraction of C22:5 ω6, as mentioned in table 1.

### Example 2

2.3 % of the isolated egg yolk lecithin product according to the invention obtained in example 1 has been used for manufacturing an infant food composition. The LCPUFA content in the final product is given in Table 3.

**Table 3**

| ω6 LCPUFA | | Docosahexaenoic acid | |
|---|---|---|---|
| Phospholipid | Triglyceride | Phospholipid | Triglyceride |
| mg/g total fat | mg/g total fat | mg/g total fat | mg/g total fat |
| 2.03 | 0 | 0.313 | 0 |

As it can be seen, 2.3 % of the composition according to the invention give a final value that approaches the values for arachidonic acid of 2.0 mg/g total fat (infant food standard).

### Example 3

Several amounts of isolated egg yolk lecithin product according to the invention obtained from example 1 have been used in an infant food composition. The LCPUFA content in the final food product is illustrated in Table 4.

**Table 4**

| Infant food formula n° | | ω6 LCPUFA | | Docosahexaenoic acid | |
|---|---|---|---|---|---|
| | % | Phospholipid | Triglyceride | Phospholipid | Triglyceride |
| | | mg/g | mg/g | mg/g | mg/g |
| | | total fat | total fat | total fat | total fat |
| 1 | 3.5 | 3.1 | 0 | 0.476 | 0 |
| 2 | 12 | 10.6 | 0 | 1.63 | 0 |
| 3 | 8 | 7.07 | 0 | 1.088 | 0 |

As it can be seen, the infant food formula 2 can be appropriate for a use as preterm infant food by requiring only 12 % of the composition in total fat. The use is therefore quite non expensive while keeping 88 % free for adding other nutriments. The FAO/WHO recommends to use 10 mg/g total fat for a preterm infant food composition in arachidonic acid. Therefore, the composition is particularly suitable.

Infant food formula 3 follows the FAO/WHO recommendation for term infant food composition requiring 7 mg/g arachidonic acid.

### Example 4

Fish oil has been added to the composition according to the invention for obtaining the following composition (see Table 5).

**Table 5**

| ω6 LCPUFA | | Docosahexaenoic acid | |
|---|---|---|---|
| Phospholipid | Triglyceride | Phospholipid | Triglyceride |
| mg/g total fat | mg/g total fat | mg/g total fat | mg/g total fat |
| 31.0 | 1.7 | 7.9 | 24.8 |

### Example 5

6.15 % of the isolated egg yolk lecithin product according to the invention obtained in example 4 have been added to an infant food composition. The LCPUFA content in the final product is given in Table 6.

**Table 6**

| ω6 LCPUFA | | Docosahexaenoic acid | |
|---|---|---|---|
| Phospholipid | Triglyceride | Phospholipid | Triglyceride |
| mg/g total fat | mg/g total fat | mg/g total fat | mg/g total fat |
| 1.905 | 0.105 | 0.486 | 1.525 |

As it can be seen, the 3.5 % of the composition according to the invention give a final value that approaches the values for arachidonic acid in the maternal milk while providing triglyceride as it can be desirable in some cases.

### Example 6

Several amounts of isolated egg yolk lecithin product according to the invention obtained from example 4 have been used in an infant food composition. The LCPUFA content in the final food product is illustrated in Table 7.

**Table 7**

| Infant food formula n° | | ω6 LCPUFA | | Docosahexaenoic acid | |
|---|---|---|---|---|---|
| | % | Phospholipid | Triglyceride | Phospholipid | Triglyceride |
| | | mg/g | mg/g | mg/g | mg/g |
| | | total fat | total fat | total fat | total fat |
| 4 | 10 | 3.1 | 0.17 | 0.79 | 2.48 |
| 5 | 33 | 10.23 | 0.561 | 2.61 | 8.18 |
| 6 | 22 | 6.82 | 0.374 | 1.74 | 5.46 |

As it can be seen, the infant food formula 5 can be appropriate for a use as preterm infant food by requiring only 33 % of the composition in total fat. The use is therefore quite non-expensive while keeping 67 % free for adding other fats. The FAO/WHO recommend to use 10 mg/g total fat for a preterm infant food composition in arachidonic acid. Therefore, the composition is particularly suitable.

Infant food formula 6 follows the FAO/WHO recommendation for term infant food composition requiring 7 mg/g arachidonic acid.

Although the preferred embodiments of the invention have been disclosed for illustrative purpose, those skilled in the art will appreciate that various modifications, additions, or substitutions are possible, without departing from the scope and spirit of the invention as disclosed in the accompanying claims.

## Claims

1. Isolated egg yolk lecithin product comprising a total fat content comprising an ω6 long chain polyunsaturated fatty acid (LCPUFA) portion having at least a phospholipidic fraction, **characterized in that** the phospholipidic fraction of said ω6 LCPUFA ranges from 30 mg/g to 100 mg/g total fat content

2. Isolated egg yolk lecithin product according to claim 1. wherein said ω6 LCPUFA portion comprises a phospholipidic fraction ranging from 50 to 100 mg/g total fat content, and preferably from 65 to 100 mg/g total fat content.

3. Isolated egg yolk lecithin product according to claim 1. wherein said ω6 LCPUFA portion comprises an arachidonic acid portion comprised of a phospholipidic fraction ranging from 24 to 80 mg/g total fat content.

4. Isolated isolated egg yolk lecithin product according to claim 3. wherein said arachidonic acid portion comprises a phospholipidic fraction ranging from 40 to 80 mg/g total fat content and preferably from 52 to 80 mg/g total fat content.

5. Isolated egg yolk lecithin product according to anyone of the precedent claims, wherein the ω6 LCPUFA portion further presents a triglyceride fraction ranging from 0 to 2 mg/g total fat content

6. Isolated egg yolk lecithin product according to claim 5. wherein the triglyceride fraction of said ω6 LCPUFA portion ranges from 0.01 to 1.7 mg/g total fat content and preferably from 0.01 to 0.5 mg/g total fat content and more preferably from 0.01 to 0.025 mg/g total fat content.

7. Isolated egg yolk lecithin product according to anyone of the precedent claims, wherein the total fat content further comprises a ω3 LCPUFA portion having a phospholipidic fraction from 4.2 to 17 mg/g total fat.

8. Isolated egg yolk lecithin product according to claim 7. wherein said phospholipidic fraction of said ω3 LCPUFA portion ranges from 7 to 17 mg/g total fat content and preferably from 9.1 to 17 mg/g total fat.

9. Isolated egg yolk lecithin product according to claim 7. wherein said ω3 LCPUFA portion comprises a docosahexaenoic acid portion having a phospholipidic fraction ranging from 3.4 mg/g to 13.6 mg/g total fat content.

10. Isolated egg yolk lecithin product according to anyone of the claims 7 to 9. wherein said ω3 LCPUFA portion further presents a triglyceride fraction ranging from 0 to 26 mg/l total fat content, and preferably from 0 to 24.8 mg/g total fat.

11. Isolated egg lecithin based composition according to anyone of the precedent claims 7 to 9. wherein said triglyceride fraction of the ω3 LCPUFA portion ranges from 0 to 0.04 mg/g total fat.

12. Isolated egg yolk lecithin product according to anyone of the claims 1 to 4 or 7 to 9. without any triglyceride fraction

13. Fat mixture comprising from 0.2 to 100 % of the isolated egg yolk lecithin product according to anyone of the precedent claims.

14. Fat mixture comprising a total fat content comprising an ω6 long chain polyunsaturated fatty acid (LCPUFA) portion having at least a phospholipidic fraction and optionally a triglyceride fraction, **characterized in that** the phospholipic fraction of the ω6 LCPUFA ranges from 1 mg/g to 100 mg/g total fat content and the triglyceride fraction of the of the ω6 LCPUFA portion ranges from 0 to 0.5 mg/g total fat.

15. Fat mixture according to claim 13 or 14. further comprising one or more fat component chosen in the group consisting of plant oil, fish oil, chemical oil and animal fat, single cell oil, aggregated cell oil, fat from animal products such as eggs, milk, flesh, meat, and the like.

16. Infant food formula comprising from 0.2 to 40 w% of the isolated egg yolk lecithin product according to anyone of the precedent claims 1 to 12.

17. Infant food formula according to claim 16. comprising from 2.3 to 33 w% of the isolated egg yolk lecithin product according to anyone of the precedent claims 1 to 12.

18. Infant food formula comprising an ω6 long chain polyunsaturated fatty acid (LCPUFA) portion having at least a phospholipidic fraction and optionally a triglyceride fraction, **characterized in that** the phospholipic fraction of the ω6 LCPUFA portion ranges from 1 mg/g to 12 mg/g total fat content and the triglyceride fraction of the ω6 LCPUFA portion ranges from 0 to 0.5 mg/g total fat.

19. Infant food formula according to anyone of the claims 16 to 18. wherein the ω6 LCPUFA portion does not contain any triglyceride or only traces.

20. Infant food formula according to anyone of the claims 16 to 19. further comprising an ω3 LCPUFA portion which does not contain any triglyceride or only traces.

21. Use of the composition according to anyone of the claims 1 to 12 in the manufacture of an infant food composition.

22. Use according to claim 21. wherein from 2.3 to 33 % w/w of the composition is used.
